# DEMANDE DE BREVET EUROPEEN

(11) **EP 1 202 237 A1**
(43) Date de publication de la demande: **02.05.2002**
(21) Numéro de dépôt: 01402818.7
(22) Date de dépôt: 30.10.2001
(51) Int. Cl.: G09B 21/00

(54) **Procédé pour rendre accessibles des informations préexistantes à des individus souffrant de déficiences visuelle et/ou auditive**

(30) Priorité: 31.10.2000 FR 0014026
(71) Demandeur: FRANCE TELECOM exploitant public, 75015 Paris (FR)
(72) Inventeur: Cousin, Francis, 86000 Poitiers (FR); Grellier, Michel, 86000 Poitiers (FR)
(74) Mandataire: Jacobson, Claude

(57) **Abrégé**

Ce procédé pour rendre accessibles des informations préexistantes (58), adaptées pour être reproduites par un système de reproduction électronique d'informations, à des individus souffrant de déficiences visuelle et/ou auditive, est caractérisé en ce qu'il comporte les étapes suivantes :
- création par un opérateur d'une forme modifiée (64) des informations préexistantes, cette forme modifiée étant perceptible par lesdits individus ; et
- association aux informations préexistantes, dans ledit système de reproduction, de leur forme modifiée de manière à permettre auxdits individus d'accéder aux informations à travers leur forme modifiée.

## Description

La présente invention concerne un procédé pour rendre accessibles des informations préexistantes adaptées pour être reproduites par un système de reproduction électronique d'informations à des individus souffrant de déficiences visuelle et/ou auditive et plus particulièrement un procédé pour rendre accessibles des informations préexistantes d'un site Internet.

Il existe aujourd'hui des procédés pour créer des sites Internet spécialement conçus pour être accessibles à des individus souffrant de déficience visuelle. Les individus souffrant de déficience visuelle sont appelés dans la suite de la description "mal voyants".

Ces procédés comprennent les étapes suivantes de :
- création des informations à présenter, puis
- création par un opérateur de reproductions de ces informations perceptibles par les mal voyants, puis
- transfert de ces reproductions d'informations à un serveur relié au réseau mondial (WEB).

L'étape de création des reproductions d'informations consiste à créer un fichier pour chaque reproduction d'informations à l'aide d'un micro-ordinateur. Ce fichier comporte des informations à présenter et des instructions définissant leur forme dans la reproduction. Ces informations et ces instructions forment le code d'une reproduction d'informations correspondante.

Les instructions utilisées sont par exemple des instructions du langage HTML ("Hypertext Mark up Language") qui permettent de déterminer les caractéristiques visuelles de la reproduction d'informations.

Dans les procédés connus, l'opérateur ne peut utiliser que du texte pour présenter les informations.

De plus, les instructions par exemple du langage HTML, sont choisies pour que le texte apparaisse uniquement en caractères de couleur noire sur un fond de couleur blanche.

Cette caractéristique sur les caractères utilisés est imposée par des moyens classiques de conversion d'informations présentes sur un écran de micro-ordinateur en informations directement perceptibles par les mal voyants.

Ces moyens sont par exemple composés par des synthétiseurs de voix et par des terminaux à caractères braille.

Les synthétiseurs de voix existants convertissent uniquement le texte composé de caractères de couleur noire sur un fond de couleur blanche en messages audibles par les mal voyants.

Les terminaux à caractères braille existants convertissent uniquement ce même texte en un texte composé de caractères braille.

Ainsi, à l'aide d'un micro-ordinateur équipé par exemple des moyens précédents, les mal-voyants peuvent consulter les informations d'un site Internet réalisé spécialement à leur intention.

Les procédés connus conduisent donc à créer des reproductions d'informations spécialement conçues pour des individus souffrant de déficience visuelle et, par conséquent présentant une ergonomie très peu satisfaisante pour les autres personnes.

On conçoit alors qu'une consultation simultanée par une personne souffrant de déficience visuelle et par une personne n'en souffrant pas est difficile.

De plus, les procédés connus ne sont pas capables de façon satisfaisante de rendre accessibles à des personnes souffrant de déficience visuelle, des informations préexistantes qui n'ont pas été initialement réalisées à leur intention.

Ce problème se rencontre notamment dans le cas des reproductions d'informations issues de sites Internet qui comportent des liens hypertextes.

Un lien hypertexte est défini dans la présente description comme un moyen d'accès à partir d'une première information à une seconde information.

Lorsqu'un lien hypertexte est actionné, par exemple à l'aide d'une souris de micro-ordinateur, la seconde information devient accessible, c'est-à-dire, par exemple, visible sur un dispositif d'affichage.

Les procédés connus de création de site Internet pour des mal-voyants ne permettent pas de leur indiquer les liens hypertextes, puisque ces derniers sont indiqués la plupart du temps par des parties de texte en couleur et soulignées.

La présente invention vise donc à remédier aux inconvénients des procédés connus en proposant un procédé permettant de rendre facilement et rapidement accessibles des informations préexistantes à des individus souffrant de déficience visuelle.

Elle a donc pour objet un procédé pour rendre accessibles des informations préexistantes, adaptées pour être reproduites par un système de reproduction électronique d'informations, à des individus souffrant de déficiences visuelle et/ou auditive, caractérisé en ce qu'il comporte les étapes suivantes :
- création par un opérateur d'une forme modifiée des informations préexistantes, cette forme modifiée étant perceptible par lesdits individus ; et
- association aux informations préexistantes, dans ledit système de reproduction, de leur forme modifiée de manière à permettre auxdits individus d'accéder aux informations à travers leur forme modifiée.

Suivant d'autres caractéristiques de l'invention :
- l'étape d'association aux informations préexistantes de leur forme modifiée consiste en outre à reproduire simultanément les informations préexistantes et leur forme modifiée dans ledit système de reproduction d'information,
- l'étape d'association aux informations préexistantes de leur forme modifiée consiste en outre à créer des moyens d'accès, perceptibles par les individus, aux formes modifiées des informations préexistantes et à reproduire simultanément les informations préexistantes et ces moyens d'accès dans ledit système de reproduction d'informations,
- l'étape de création d'une forme modifiée des informations préexistantes, comprend en outre les étapes de création d'un double des informations préexistantes, puis modification des informations préexistantes ou de leur double pour créer leur forme modifié,
- ledit système de reproduction électronique d'informations comprend un dispositif d'affichage électronique et en ce que lesdits individus souffrent de déficience visuelle,
- l'étape de création d'une forme modifiée des informations préexistantes comporte en outre l'étape de création d'une légende pour les informations visuelles préexistantes à l'aide de caractères perceptibles par les individus souffrant de déficience visuelle,
- lesdits caractères perceptibles sont des caractères de couleur noire sur fond de couleur blanche,
- lesdits caractères perceptibles par les individus souffrant de déficience visuelle sont adaptés pour être convertis à l'aide de moyens de conversion en informations directement perceptibles par lesdits individus,
- lesdits caractères perceptibles par les individus souffrant de déficience visuelle sont des caractères grossis pour être lisibles directement par des individus souffrant de déficience visuelle,
- ladite étape de création d'une légende comporte en outre l'étape d'adjonction à cette légende d'au moins un pictogramme perceptible par les individus souffrant de déficience visuelle et destiné à leur indiquer que la légende forme également un moyen d'accès vers une forme modifiée des informations,
- ledit système de reproduction électronique d'informations comprend des moyens audiophoniques et en ce que lesdits individus souffrent de déficience auditive,
- l'étape de création d'une forme modifiée des informations préexistantes comporte en outre l'étape de création d'une légende pour les informations auditives préexistantes à l'aide de caractères perceptibles par les individus souffrant de déficience auditive,
- les informations préexistantes sont des informations obtenues à partir d'un site Internet,
- lesdites informations préexistantes et leur forme modifiée sont réalisées à l'aide du langage HTML.

L'invention sera mieux comprise à la lecture de la description qui va suivre, donnée uniquement à titre d'exemple et faite en se référant aux dessins annexés sur lesquels :
- La Fig.1 représente un système classique pour modifier et mettre à jour des reproductions d'informations d'un site Internet.
- Les Figs. 2 et 3 représentent des exemples d'informations issues d'un site Internet associées à leur forme modifiée pour être rendues accessibles à des mal voyants et à des voyants à l'aide du procédé selon l'invention.

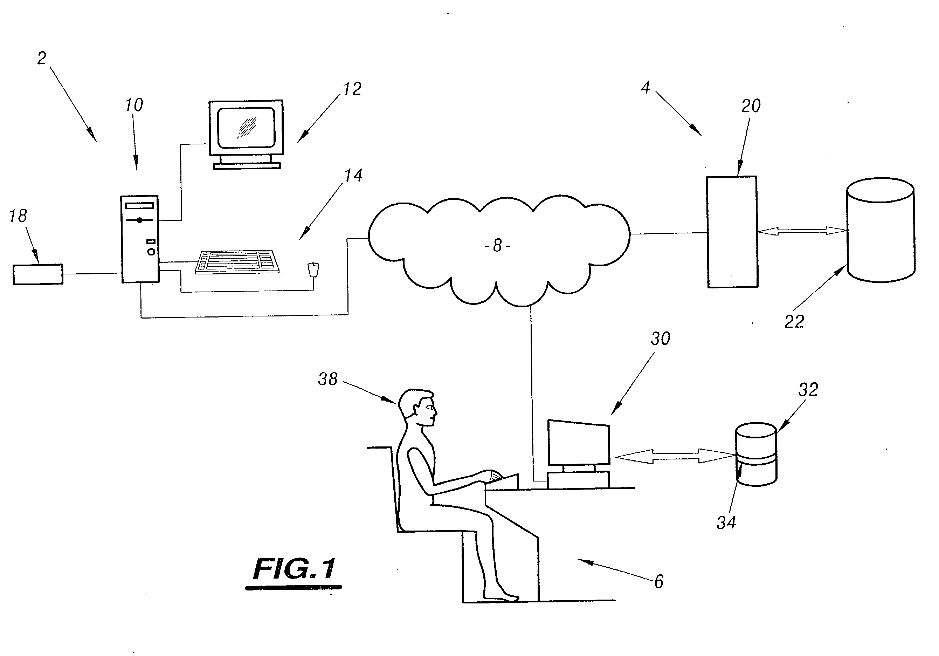

La figure 1 illustre un système qui comporte trois ensembles 2,4 et 6 raccordés à un réseau de transmission d'informations 8 formé par le réseau mondial (WEB).

L'ensemble 2 se compose d'un micro-ordinateur 10 équipé d'un système 12 de reproduction électronique d'informations, par exemple un écran classique, et de moyens 14 d'acquisition d'informations par exemple un clavier et/ou une souris.

Le système 12 peut également comporter des moyens audiophoniques, tels que des haut-parleurs associés à une carte son, destinés à convertir des informations auditives présentées sous forme numérique en signaux sonores.

Le système 12 de reproduction électronique d'informations et les moyens 14 d'acquisition d'informations sont destinés à être utilisés par une personne ne souffrant pas de déficience visuelle pour consulter des sites Internet.

Le micro-ordinateur 10 est également équipé de moyens 18 de conversion d'informations présentes sur le système 12 en informations directement perceptibles par les mal voyants.

Ces moyens 18 se composent par exemple d'un synthétiseur de voix classique et d'un terminal braille classique.

L'ensemble 4 comporte un serveur Internet 20 raccordé au réseau 8. Le serveur 20 comporte des moyens 22 de stockage d'informations accessibles au travers du réseau 8 à tout individu équipé d'un micro-ordinateur, tel que le micro-ordinateur 10.

L'ensemble 6 se compose d'un micro-ordinateur 30 équipé de moyens 32 de stockage d'informations. Les moyens 32 de stockage d'informations stockent des fichiers 34 contenant chacun le code de reproductions d'informations d'un site Internet préexistant, c'est-à-dire d'un site dont les informations n'ont pas encore été rendues accessibles aux mal voyants à l'aide du procédé selon l'invention. Les reproductions d'informations d'un site préexistant et les informations qu'elles contiennent sont respectivement appelées par la suite reproductions préexistantes et informations préexistantes.

Le micro-ordinateur 30 est également équipé d'un logiciel d'édition de texte classique et d'un logiciel de transfert de fichier classique.

Le logiciel d'édition de texte permet à un opérateur 38 d'éditer les fichiers 34 et de modifier le code des reproductions d'informations préexistantes qu'ils contiennent. Le logiciel de transfert de fichiers, tel que par exemple le logiciel FTP, permet à l'opérateur 38 de transférer au serveur 20 les fichiers 34 puis de les stocker dans les moyens 22 de stockage d'informations de celui-ci.

Une telle architecture permet donc à l'opérateur 38 de modifier les reproductions d'informations d'un site Internet.

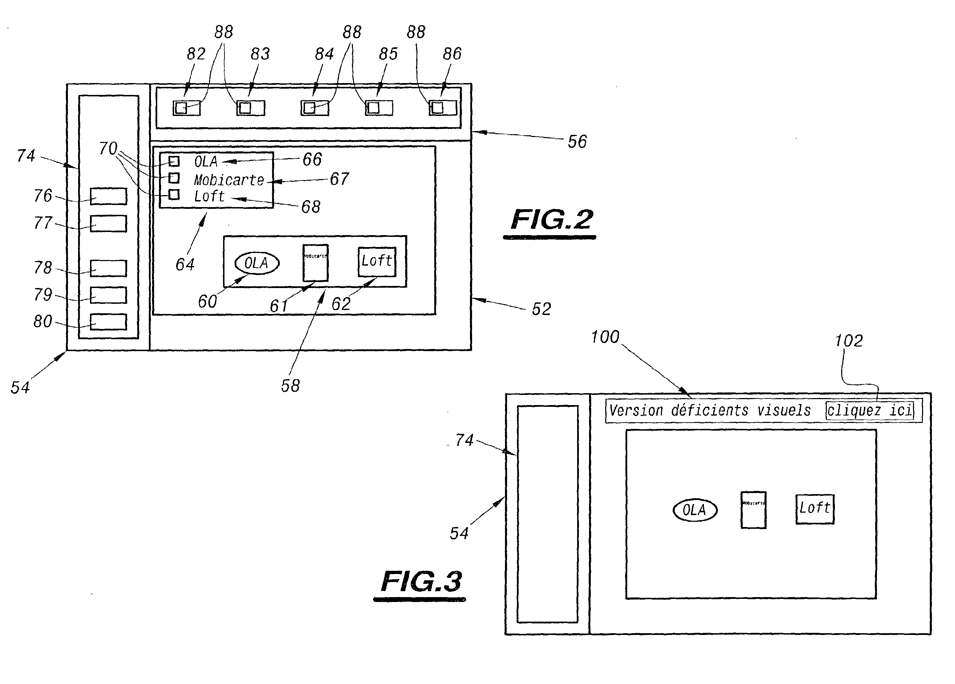

La figure 2 représente des informations préexistantes issues d'un site Internet associées à leur forme modifiée pour être rendues accessibles à la fois à des voyants et à des mal voyants.

Cette reproduction d'informations se compose de trois zones d'affichage 52, 54 et 56.

La zone d'affichage 52 comporte des informations préexistantes 58, c'est-à-dire des informations qui existaient dans un fichier tel que le fichier 34 avant qu'un procédé selon l'invention soit appliqué.

Ces informations préexistantes 58 se composent de trois images 60, 61 et 62. Chaque image 60, 61 et 62 est un lien hypertexte vers d'autres informations préexistantes.

La zone d'affichage 52 comporte également une forme modifiée 64 des informations préexistantes 58 pour qu'elle soit perceptible par les mal voyants à l'aide de moyens de conversion tels que les moyens 18 de conversion de la figure 1.

La forme modifiée 64 des informations se compose de texte aligné à gauche. Le texte comprend trois légendes 66,67 et 68 correspondant chacune respectivement à une forme modifiée des informations préexistantes 60, 61 et 62.

Les légendes 66, 67 et 68 se composent de caractères de couleur noire sur un fond de couleur blanche et d'un pictogramme 70 destiné à indiquer aux mal voyants que la légende est aussi un lien hypertexte. Les légendes 66,67 et 68 renvoient chacune à des formes modifiées d'informations.

La zone d'affichage 54 comprend un sommaire 74 d'un site Internet.

Le sommaire 74 se compose de cinq liens hypertextes 76 à 80 qui renvoient à des informations préexistantes.

Le sommaire 74 n'est pas modifié pour être perceptible par les mal voyants. Il est donc destiné à être utilisé par les voyants désirant consulter uniquement des informations préexistantes du site Internet, c'est à dire sous une forme non adaptée à la consultation par des mal voyants.

La zone d'affichage 56 comprend une forme modifiée des liens hypertextes 76 à 80 pour être perceptibles par des mal voyants.

Cette forme modifiée se compose de cinq légendes 82,83,84,85 et 86. Chacune de ces légendes est formée de caractères de couleur noire sur un fond de couleur blanche, et comporte également un pictogramme 88 destiné à indiquer aux mal voyants qu'il s'agit d'un lien hypertexte. Chacun de ces liens hypertextes renvoie à une forme modifiée des informations préexistantes pour être perceptibles par des mal voyants.

La figure 3 représente un exemple d'association d'informations préexistantes à leur forme modifiée pour être rendues accessibles aux mal voyants.

Elle comporte un moyen d'accès 100 à une forme modifiée des informations préexistantes pour être perceptibles par les mal voyants. Le moyen d'accès 100 est formé par une légende formant un lien hypertexte. La légende se compose de caractères en couleur noire sur un fond de couleur blanche et d'un pictogramme 102 pour indiquer aux mal voyants qu'il s'agit d'un lien hypertexte.

Le fonctionnement du procédé pour rendre accessibless des informations préexistantes, adaptées pour être reproduites par un système de reproduction électronique d'informations, à des individus souffrant de déficience visuelle, va maintenant être décrit dans le cas particulier où les informations préexistantes sont celles d'un site Internet.

Le procédé se compose de trois étapes principales réalisées par un opérateur tel que l'opérateur 38 :
- une première étape de création d'une forme modifiée des informations préexistantes du site Internet pour qu'elles soient perceptibles par les mal voyants,
- une deuxième étape d'association aux informations préexistantes de leur forme modifiée de manière à permettre aux individus souffrant de déficience visuelle d'accéder aux informations à travers leur forme modifiée, et
- une troisième étape de transfert des fichiers modifiés du site Internet à un serveur tel que le serveur 20.

Ces deux premières étapes peuvent être exécutées dans un ordre quelconque par l'opérateur y compris simultanément.

Dans un premier mode de réalisation du procédé selon l'invention, la première et la seconde étapes sont réalisées simultanément. Elles consistent à éditer à l'aide d'un éditeur de texte classique chacun des fichiers préexistants 34 du site Internet et à rajouter dans ces fichiers, par exemple des instructions du langage HTML, pour créer et rajouter une forme modifiée des informations préexistantes pour qu'elles soient perceptibles par des utilisateurs mal voyants.

Plus précisément, l'étape de création de la forme modifiée des informations préexistantes consiste à créer des légendes en caractères de couleur noire sur un fond de couleur blanche associées à chaque image, texte, ou lien hypertexte préexistant. L'opérateur ajoute également à la légende des liens hypertextes un pictogramme perceptible par les mal voyants pour leur indiquer qu'il s'agit d'un lien hypertexte.

Par exemple, le pictogramme ajouté pour chaque légende d'un lien hypertexte est un chiffre et de préférence le chiffre est différent pour chaque légende d'un lien hypertexte afin d'aider le mal voyant à identifier et à mémoriser ce dernier.

Les liens hypertextes créés et rajoutés renvoient vers des formes modifiées des informations préexistantes.

Finalement, lorsque l'opérateur a réalisé la première et la deuxième étapes pour l'ensemble des fichiers 34 du site Internet, il transfère, lors de la troisième étape, ces fichiers modifiés à un serveur Internet tel que le serveur 20 de la figure 1 où ils sont stockés de façon classique dans les moyens de stockage d'informations tels que les moyens 22 du serveur 20.

On remarquera que le code correspondant à la forme modifiée des informations est rajouté dans le fichier contenant déjà le code correspondant à la reproduction d'informations préexistantes et que par conséquent, les informations préexistantes et leur forme modifiée sont associées dans une même reproduction d'informations au fur et à mesure de leur création.

On notera également que le site Internet obtenu après l'application du premier mode de réalisation du procédé selon l'invention est consultable simultanément par des voyants et des mal voyants utilisant un même micro-ordinateur, tel que le micro-ordinateur 10 de la figure 1.

D'autres modes de réalisation de l'invention peuvent être envisagés.

Ainsi, selon un second mode de réalisation du procédé selon l'invention, celui-ci comporte quatre étapes principales :
- une première étape de création d'un double des informations préexistantes, puis
- une deuxième étape de création des formes modifiées des informations préexistantes,
- une troisième étape d'association de la forme modifiée des informations aux informations préexistantes, et
- une quatrième étape de transfert des fichiers contenant les formes modifiées des informations du site Internet vers un serveur Internet tel que le serveur 20 de la figure 1.

La première étape consiste à créer un double de chaque fichier préexistant tel que les fichiers 34 à l'aide d'opérations classiques de copie de fichier sur un micro-ordinateur.

La seconde étape consiste à éditer et à modifier à l'aide d'un éditeur de texte classique chacun des doubles des fichiers préexistants 34 précédemment créé puis à créer et à ajouter une forme modifiée des informations préexistantes pour chaque fichier.

Cette étape est similaire à la première et à la seconde étapes du premier mode de réalisation du procédé selon l'invention. Cette étape ne sera donc pas décrite plus en détail.

La troisième étape consiste à éditer un fichier préexistant du site Internet puis à créer et à rajouter dans ce fichier au moins un moyen d'accès, tel que le lien hypertexte 100 de la figure 3, aux formes modifiées des informations préexistantes créées lors de la deuxième étape.

Aucune modification supplémentaire n'est apportée à ce fichier préexistant édité.

De préférence, le fichier préexistant édité sera la page d'accueil du site Internet préexistant.

La quatrième étape de transfert des fichiers modifiés vers un serveur Internet est similaire à la troisième étape du premier mode de réalisation du procédé selon l'invention. Cette étape ne sera donc pas décrite plus en détail.

Ainsi, selon le second mode de réalisation du procédé selon l'invention, on obtient un site Internet où l'utilisateur voyant peut choisir de consulter la version préexistante du site Internet, à l'aide du sommaire préexistant tel que le sommaire 74 de la figure 3, tandis que les mal voyants, en utilisant un lien hypertexte tel que le lien hypertexte 100 de la figure 3, peuvent choisir de consulter un double du site rendu accessible simultanément aux voyants comme aux mal voyants utilisant un même micro-ordinateur, tel que le micro-ordinateur 10 de la figure 1.

Dans une variante du second mode de réalisation du procédé selon l'invention décrit ci-dessus, la deuxième étape précédemment décrite est remplacée par une étape qui consiste non pas à rajouter aux informations préexistantes une forme modifiée de celles-ci, mais à remplacer ces informations préexistantes par leur forme modifiée pour être perceptible par les mal voyants.

Les autres étapes du second mode de réalisation du procédé selon l'invention demeurent inchangées.

On remarquera que l'on obtient ainsi un site Internet destiné à être consulté successivement par les voyants et les mal voyants et non plus destiné à être consulté simultanément.

Dans une autre variante du second mode de réalisation du procédé selon l'invention, la troisième étape est remplacée par une étape qui consiste à rajouter à l'aide d'opérations de programmation classique, une zone d'affichage telle que la zone 56 de la figure 2 qui coexiste sur le même dispositif d'affichage avec les zones d'affichage préexistantes du site Internet, telles que par exemple les zones 52 et 54 de la figure 2.

Cette zone de visualisation rajoutée est destinée à contenir une forme modifiée des informations préexistantes.

De préférence, cette zone de visualisation rajoutée contient une forme modifiée du sommaire du site Internet tel que le sommaire 74 de la figure 2. On obtient ainsi des informations préexistantes associées avec leur forme modifiée dans des zones de visualisation indépendantes. On remarquera que dans cette variante, l'étape d'association d'une forme modifiée avec la forme préexistante succède à l'étape de création de la forme modifiée.

On remarquera que les différents modes de réalisation du procédé selon l'invention décrit ci-dessus peuvent être combinés dans un même procédé et appliqués à un même site Internet.

On notera également que la forme modifiée des informations préexistantes peut être réalisée à l'aide de caractères suffisamment grossis pour être directement perceptibles par des individus souffrant de déficience visuelle légère.

Le procédé décrit dans le cas particulier des mal voyants et d'un site Internet peut aussi être utilisé pour rendre accessibless un site Internet à des mal entendants.

Dans ce cas, les étapes de création d'une forme modifiée des informations préexistantes consistent à transcrire les informations auditives préexistantes sous forme de texte lisible par les mal entendants.

## Revendications

1. Procédé pour rendre accessibles des informations préexistantes (58), adaptées pour être reproduites par un système (12) de reproduction électronique d'informations, à des individus souffrant de déficiences visuelle et/ou auditive, **caractérisé en ce qu'**il comporte les étapes suivantes :
- création par un opérateur d'une forme modifiée (64) des informations préexistantes, cette forme modifiée étant perceptible par lesdits individus ; et
- association aux informations préexistantes, dans ledit système de reproduction, de leur forme modifiée de manière à permettre auxdits individus d'accéder aux informations à travers leur forme modifiée, et
**en ce que** l'étape de création d'une forme modifiée des informations préexistantes comporte en outre une étape de création d'une légende à l'aide de caractères perceptibles par lesdits individus souffrant de déficiences visuelle et/ou auditive.

2. Procédé selon la revendication 1, **caractérisé en ce que** l'étape d'association aux informations préexistantes de leur forme modifiée consiste en outre à reproduire simultanément les informations préexistantes (58) et leur forme modifiée (64) dans ledit système de reproduction d'informations.

3. Procédé selon la revendication 1, **caractérisé en ce que** l'étape d'association aux informations préexistantes de leur forme modifiée consiste en outre à créer des moyens d'accès (100), perceptibles par les individus, aux formes modifiées des informations préexistantes et à reproduire simultanément les informations préexistantes et ces moyens d'accès dans ledit système (12) de reproduction d'informations.

4. Procédé selon l'une quelconque des revendications précédentes, **caractérisé en ce que** l'étape de création d'une forme modifiée (64) des informations préexistantes, comprend en outre les étapes de :
- création d'un double des informations préexistantes, puis
- modification des informations préexistantes ou de leur double pour créer leur forme modifiée.

5. Procédé selon l'une quelconque des revendications précédentes, **caractérisé en ce que** ledit système (12) de reproduction électronique d'informations comprend un dispositif d'affichage électronique et **en ce que** lesdits individus souffrent de déficience visuelle.

6. Procédé selon la revendication 5, **caractérisé en ce que** l'étape de création d'une légende pour les informations visuelles préexistantes comporte l'étape de créer cette légende à l'aide de caractères perceptibles par les individus souffrant de déficience visuelle.

7. Procédé selon la revendication 6, **caractérisé en ce que** lesdits caractères perceptibles par les individus souffrant de déficience visuelle sont adaptés pour être convertis à l'aide de moyens (18) de conversion en informations directement perceptibles par lesdits individus.

8. Procédé selon la revendication 6 ou 7, **caractérisé en ce que** lesdits caractères perceptibles sont des caractères de couleur noire sur fond de couleur blanche.

9. Procédé selon la revendication 6, 7 ou 8, **caractérisé en ce que** lesdits caractères perceptibles par les individus souffrant de déficience visuelle sont des caractères grossis pour être lisibles directement par des individus souffrant de déficience visuelle.

10. Procédé selon la revendication 6, **caractérisé en ce que** ladite étape de création d'une légende comporte en outre l'étape d'adjonction à cette légende d'au moins un pictogramme (70,88) perceptible par les individus souffrant de déficience visuelle et destiné à leur indiquer que la légende forme également un moyen d'accès vers une forme modifiée des informations.

11. Procédé selon l'une quelconque des revendications 1 à 4, **caractérisé en ce que** ledit système (12) de reproduction électronique d'informations comprend des moyens audiophoniques et **en ce que** lesdits individus souffrent de déficience auditive.

12. Procédé selon la revendication 11, **caractérisé en ce que** l'étape de création d'une forme modifiée des informations préexistantes comporte en outre l'étape de création d'une légende pour les informations auditives préexistantes à l'aide de caractères perceptibles par les individus souffrant de déficience auditive.

13. Procédé selon l'une quelconque des revendications précédentes, **caractérisé en ce que** les informations préexistantes sont des informations obtenues à partir d'un site Internet.

14. Procédé selon la revendication 13, **caractérisé en ce que** lesdites informations préexistantes et leur forme modifiée sont réalisées à l'aide du langage HTML.
